(19) Europäisches Patentamt
European Patent Office
Office européen des brevets

(11) EP 4 574 875 A1

# (12) EUROPEAN PATENT APPLICATION

(43) Date of publication:
**25.06.2025 Bulletin 2025/26**

(21) Application number: **23219305.2**

(22) Date of filing: **21.12.2023**

(51) International Patent Classification (IPC):
***C08G 18/67*** *(2006.01)* ***C08L 75/16*** *(2006.01)*
***C04B 26/16*** *(2006.01)* ***C08G 18/79*** *(2006.01)*
***C08G 18/81*** *(2006.01)*

(52) Cooperative Patent Classification (CPC):
**C08L 75/16; C04B 26/16; C08G 18/672; C08G 18/795; C08G 18/8175**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hilti Aktiengesellschaft**
**9494 Schaan (LI)**

(72) Inventors:
- **Nickerl, Georg**
  **86911 Dießen am Ammersee (DE)**
- **Plenk, Christian**
  **86916 Kaufering (DE)**
- **Martin-Lasanta, Ana-Maria**
  **35398 Gießen (DE)**
- **Jeong, Soyeon**
  **20259 Hamburg (DE)**

(74) Representative: **Hilti Aktiengesellschaft**
**Corporate Intellectual Property**
**Feldkircherstrasse 100**
**Postfach 333**
**9494 Schaan (LI)**

## (54) A PROCESS FOR PRODUCING A RESIN COMPOSITION COMPRISING ISOCYANURATES FOR IMPROVING PULL OUT PERFORMANCE OF CHEMICAL ANCHORS

(57) The present invention relates to a process for producing a resin composition comprising at least one compound of isocyanurate. The present invention also relates to a resin composition, a multi-component reactive resin system, and a mortal composition comprising said isocyanurate produced by the process of the present invention. The present invention also relates a use of resin composition as base resin in a multi-component reactive resin system for anchoring means. The present invention finally relates to a method for the chemical fastening of construction elements in boreholes.



Processed by Luminess, 75001 PARIS (FR)

## Description

The present invention relates to a process for producing a resin composition comprising at least one compound of isocyanurate. The present invention also relates to a resin composition, a multi-component reactive resin system, and a mortal composition comprising said isocyanurate produced by the process of the present invention. The present invention also relates a use of resin composition as base resin in a multi-component reactive resin system for anchoring means. The present invention finally relates to a method for the chemical fastening of construction elements in boreholes.

The use of radically curable reactive resin mixtures as an organic binder for chemical fastening technology is well known in the art. A standard multi-component system comprises a reactive resin component containing a reactive resin mixture and a curing/hardening component containing a curing agent. Other common ingredients, such as fillers, accelerators, stabilizers, solvents and reactive thinners, may be present in one and/or the other component. Once the two components are mixed the resin can form into a thermoset by a radically hardening reaction, i.e. polymerization.

Reactive resins used in chemical fastening have very high demands in things like mechanical strength and adhesion to different materials (e.g. mineral substrates, glass, steel and the like).

Functionalized acrylates are usually used as reactive resins or base resins in conventional reactive resin systems. WO 2012/158887 A1 describes chemical anchors with a functionalized acrylate as the base resin. However, it is well known that acrylates react much faster than methacrylates, which often has a detrimental effect on processing time. This is described, for example, in Ballard N., Asua J. M., "Radical polymerization of acrylic monomers: An overview", Progress in Polymer Science, Vol. 79, 2018, 40-60.

It is also known that the performance of chemical mortars is adversely affected by temperature. Acrylates have a lower glass transition temperature $T_g$ compared to methacrylates. The performance of installed chemical anchors decreases at elevated temperatures, such as in the case of a fire. This is described, for example, in Lahouar, M., Caron, J.-F., Pinoteau, N., For6t, G., Benzarti, K., "Mechanical behavior of adhesive anchors under high temperature exposure: experimental investigation", International Journal of Adhesion and Adhesives, 2017, 78, 200-211. The polymeric network and in turn the load-bearing capacity of a chemical anchor weakens as temperatures increase. Therefore, chemical anchors based on acrylates often do not have sufficient fire resistance.

There is therefore a need for a process for producing a resin composition used for anchoring means that would have an improved pull-out strength at elevated temperatures, such as at 160 °C and reduced shrinkage while curing at room temperature.

A process for producing a resin composition comprising at least one compound of iscocyanurate would provide a person skilled in the art the ability to control the NCO content and eventually the size (i.e. molecular weight) of the base resin. Having the ability to control the size of the base resin makes it possible to improve the performance of the chemical anchor in the pull-out test at elevated temperatures and to reduce the shrinkage.

The object of the present invention is to improve performance of chemical anchors at elevated temperatures, such as improving pull-out strength at 160 °C and reducing shrinkage while curing at room temperature.

It was surprisingly found that with a process of the present invention a resin composition comprising at least one compound of isocyanurate can be produced, which when used as a base resin in a multi-component reactive resin system or in a mortar composition for anchoring means, the bond strength at 160 °C is improved in comparison to known chemical anchors. It was also surprisingly found that with a process of the present invention a resin composition comprising at least one compound of isocyanurate can be produced, which when used as a base resin in a multi-component reactive resin system or in a mortar composition for anchoring means, the shrinkage is reduced during curing at room temperature.

Although commercially available isocyanurates may be accessible to a person skilled in the art, they often come diluted with non-reactive solvents such as ethyl acetate. Using such products would require a person skilled in the art to include an extra step of evaporation. This makes the process of making a working resin very cumbersome for a person skilled in the art. Thus, there is also a need for a new in situ process of producing isocyanurates without the use of non-reactive diluents, such as ethyl acetate. It was surprising found that a resin composition comprising isocyanurates according to the present invention could be made by using reactive diluents in situ without relying on non-reactive diluents.

For better understanding of the present invention, the terminology used herein is defined below:

"a" or "an" as articles preceding a chemical compound class mean that one or more compounds falling under that chemical compound class may be meant. In a preferred embodiment, these articles mean only a single compound;

*"about'* or "circa" or "approximately" before a number indicates a value of a range of ± 5% of that number, preferably ± 2% of that number, preferably ± 1% of that number, especially preferably ± 0% of that number (i.e. exactly that number);

*"aliphatic compounds"* are acyclic or cyclic, saturated or unsaturated carbon compounds, excluding aromatic compounds;

*"alicyclic compounds"* are compounds having a carbocyclic ring structure, excluding benzene derivatives or other aromatic systems;

*'alkyl'* is saturated hydrocarbon residue, which may be branched or unbranched; preferably a C1-C15 alkyl, especially a C1-C4 alkyl, i.e. an alkyl selected from the group consisting of methyl, ethyl, n-propyl, iso-propyl, n-butyl, iso-butyl, and tert-butyl; Methyl, ethyl and tert-butyl are particularly preferred, and methyl is particularly preferred;

*"accelerator"* is a reagent which assists the initiator to produce larger quantities of radicals even at low temperatures, or which catalyzes the decay reaction of the initiator;

*"araliphatic compounds"* are aliphatic compounds having an aromatic backbone such that, in the case of a functionalized araliphatic compound, a functional group that is present is bonded to the aliphatic rather than the aromatic part of the compound;

*"aromatic compounds"* are compounds which follow Hückel's (4n+2) rule;

*"at least one"* means numerically *"one or more".* In a preferred embodiment, the term numerically means "one", in another embodiment the term may mean "two", "three", "four", "five", "six", "seven", "eight", "nine", "ten" or respectively any number more than "one";

*"amines"* are compounds which are derived from ammonia by replacing one, two or three hydrogen atoms with hydrocarbon groups, and have the general structures $RNH_2$ (primary amines), $R_2NH$ (secondary amines) and $R_3N$ (tertiary amines) (see: IUPAC Compendium of Chemical Terminology, 2nd ed. (the "Gold Book"), compiled by A. D. McNaught and A. Wilkinson, Blackwell Scientific Publications, Oxford (1997));

*'reactive resin'* or *'base resin'* means at least one compound, usually solid or highly viscous that is radically curable, i.e. hardens by polymerisation;

*"salt'* is a compound that is made up of positively charged ion (cation) and negatively charged ion (anion). There are ionic bonds between these ions.

*"include"* and "comprising" mean that there may be other components in addition to those mentioned. These terms are meant inclusively and therefore include *"consisting of". "Consisting of"* is meant conclusively and means that no further constituents may be present. In an another embodiment, the terms *"comprise"* or *"comprising"* mean *"consisting of";* and

a range delimited by numbers, e.g. *"from 80 to 120 weight* %" means that the two corner values and each value within that range are individually disclosed.

All standards cited in this text (e.g. DIN standards) were used in the version that was current on the filing date of this application.

Present invention relates to a process for producing a resin composition comprising at least one compound of isocyanurate, comprising the steps of

(a) trimerizing at least one diisocyanate comprising at least one (C1-C4 alkyl) substituted or unsubstituted benzyl ring and/or comprising at least one (C1-C4 alkyl) substituted or unsubstituted cyclohexyl ring, preferably selected from the group comprising *tolylene diisocyanate, diphenylmethane diisocyanate, xylylene diisocyanate, isophorone diisocyanate, tetramethylxylylene diisocyanate, 1,3-bis(isocyanatomethyl)cyclohexane,* or combinations of two or more thereof, preferably selected from the group comprising *tolylene diisocyanate, diphenylmethane diisocyanate, xylylene diisocyanate, isophorone diisocyanate or combinations of two or more thereof,*

(b) reacting the NCO groups of the resulting trimer of step (a) with at least one hydroxy alkyl methacrylate according to formula (I)

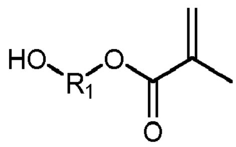

(I),

wherein R1 is a branched or linear aliphatic C1-C15 alkylene group, wherein the NCO content (%) of the trimer of step (a) is in the range of from 10 to 40 %.

Step (a)

It is preferred that the at least one diisocyanate used for trimerizing of step (a) is selected from the group comprising *tolylene diisocyanate, diphenylmethane diisocyanate, xylylene diisocyanate, isophorone diisocyanate, tetramethylxylylene diisocyanate, 1,3-bis(isocyanatomethyl)cyclohexane* and combinations or two or more thereof.

It is preferred that the diisocyanates as disclosed herein are commercially available with acceptable purity to a person skilled in the art, such as disclosed herein in the Example section of the description text.

It is preferred that the trimerizing step (a) comprises at least one inhibitor/stabilizer.

Suitable inhibitors commonly used for radical polymerizable compounds would also be suitable for the trimerizing step (a) of the present invention and are known to a person skilled in the art. In case the trimerizing step (a) comprises at least one inhibitor, it is preferred that the at least one inhibitor is selected from phenolic inhibitors and/or non-phenolic inhibitors, more preferably phenothiazines.

It is preferred that phenolic inhibitors include phenols, such as 2-methoxyphenol, 4-methoxyphenol, 2,6-di-tert-butyl-4-methylphenol, 2,4-di-tert-butylphenol, 2,6-di-tert-butylphenol, 2,4,6-trimethylphenol, 2,4,6-tris(dimethylaminomethyl)phenol, 4,4'-thio-bis(3-methyl-6-tert-butylphenol),4,4'-isopropylidene diphenol, 6,6'-di-tert-butyl-4,4'-bis(2,6-di-tert-butylphenol), 1,3,5-trimethyl-2,4,6-tris(3,5-di-tert-butyl-4-hydroxybenzyl)benzene, 2,2'-methylene-di-p-cresol, Catechols, such as pyrene catechin, and catechol derivatives, such as butyl pyrene catechins, such as 4-tert-butyl pyrene catechin and 4,6-di-tert-butyl catechin, hydroquinones, such as hydroquinone, 2-methylhydroquinone, 2-tert-butylhydroquinone, 2,5-di-tert-butylhydroquinone, 2,6-di-tert-butylhydroquinone, 2,6-dimethylhydroquinone, 2,3,5-trimethylhydroquinone, benzoquinone, 2,3,5,6-tetrachloro-1,4-benzoquinone, methylbenzoquinone, 2,6-dimethylbenzoquinone, naphthoquinone, or mixtures of two or more thereof. Inhibitors listed herein are often part of commercially available radical-curing reactive resin components.

It is preferred that the non-phenolic inhibitors are selected from phenothiazines, such as phenothiazines and/or derivatives or combinations thereof, or stable organic radicals, such as galvinoxyl and N-oxyl radicals, in particular of the piperidinyl-N-oxyl or tetrahydropyrrole-N-oxyl type, such as aluminum-N-nitrosophenylhydroxylamine, diethyl hydroxylamine, oxime, such as acetaldoxime, acetone oxime, methylethyl ketoxime, salicyloxime, benzoxime, glyoxime, dimethylglyoxime, acetone O-(benzyloxycarbonyl)oxime, TEMPOL, TEMPO and the like.

Furthermore, pyrimidinol or pyridinol compounds substituted in the para-position to the hydroxyl group, as described in patent specification DE 10 2011 077 248 B1, can be used as inhibitors. For example, stable N-oxyl radicals such as those described in DE 199 56 509 A1 and DE 195 31 649 A1 can be used as inhibitors in the resin composition according to the present invention. Such stable nitroxyl radicals are of the type piperidinyl-N-oxyl or tetrahydropyrrole-N-oxyl or a mixture thereof. Preferred stable nitroxyl radicals are selected from the group consisting of 1-oxyl-2,2,6,6-tetramethylpiperidine, 1-oxyl-2,2,6,6-tetramethylpiperidine-4-ol (also referred to as TEMPOL), 1-oxyl-2,2,6,6-tetramethylpiperidine-4-one (also referred to as TEMPON),1-oxyl-2,2,6,6-tetramethyl-4-carboxyl-piperidine (also referred to as 4-carboxy-TEMPO), 1-oxyl-2,2,5,5-tetramethylpyrrolidine, 1-oxyl-2,2,5,5-tetramethyl-3-carboxylpyrrolidine (also known as 3-carboxy-PROXYL and mixtures of two or more of these compounds, with 1-oxyl-2,2,6,6-tetramethylpiperidine-4-ol (TEMPOL) being particularly preferred.

Preference is given to the inhibitor(s) selected from the group consisting of N-oxyl radicals, catechols, catechol derivatives, phenothiazines and a mixture of two or more of them. Particularly preference is given to the inhibitor(s) selected from the group consisting of TEMPOL, catechols and phenothiazines. The inhibitors used in the examples are particularly preferred, preferably in the quantities indicated in the examples.

The inhibitors can be used either alone or as a combination of two or more, depending on the desired properties of the reactive resin. The combination of phenolic and non-phenolic inhibitors is preferred.

In case where the resin composition, prepared according to the process of the present invention according to any one of embodiments, comprises at least one inhibitor, it is preferred that the amount of the at least one inhibitor is in the range of from about 0.0005 to about 2 weight % based on the total weight of the resin composition/base resin, more preferably in the range of from about 0.01 to about 1 weight %, and even more preferably in the range of from about 0.05 to about 1 weight %.

It is preferred that the trimerizing step (a) comprises at least one catalyst. In some embodiments at least one

catalyst can also be described as a co-accelerator. It is preferred that at least one catalyst is selected from the group selected from the group consisting of benzyl alcohols, tertiary amines, novolaks, imidazoles, tertiary aminophenols, styrenized phenols, organophosphines, Lewis bases, Lewis acids, organophosphates and combinations or two or more thereof, preferably the at least one co-accelerator is selected from the group consisting of 2,4,6-tris(dimethylaminomethyl) phenol, 2,4,6-tris(dimethylamino)phenol and bis[(dimethylamino)methyl]phenol, more preferably the at least one catalyst/co-accelerator contains a mixture of 2,4,6-tris(dimethylaminomethyl)phenol and bis(dimethylaminomethyl)phenol. Mixtures of this kind are commercially available, for example as Ancamine® K54 (Evonik, Germany).

It is preferred that the trimerizing step (a) comprises at least one reactive diluent. According to the present invention, it is preferred that the at least one reactive diluent used in step (a) does not react with the NCO groups.

Reactive diluents adjust the viscosity of the reaction relating to the process of the present invention, the resulting resin composition and participate in the radically curable reaction. Suitable reactive diluents are described in applications EP 1 935 860 A1 and DE 195 31 649 A1. It is preferred that the at least one reactive diluent is selected from compounds such as a (meth)acrylic acid ester, whereby aliphatic or aromatic C5C15(meth)acrylates are particularly preferred. Suitable examples include:, 1,2-ethanedioldi (meth)acrylate, 1,3-propanedioldi(meth)acrylate, 1,3-butanedioldi(meth) acrylate, 1,4-butanedi(meth) acrylate, trimethylolpropanetri(meth)acrylate, phenethyl(meth)acrylate, tetrahydrofurfuryl(meth)acrylate,N,N,N-dimethylaminoethyl(meth)acrylate, N,N-dimethylaminomethyl(meth)acrylate, acetoacetoxyethyl(meth)acrylate, isobornyl(meth)acrylate, 2-ethylhexyl(meth)acrylate, methoxypolyethylene glycol mono(meth)acrylate, trimethylcyclohexyl(meth)acrylate, , dicyclopentenyloxyethyl(meth)acrylate and/or tricyclopentadienyldi(meth) acrylate, bisphenol-A-(meth)acrylate, novolakepoxidi(meth)acrylate, tricyclo[5.2.1.0]decandimethanoldi(meth)acrylate, di-[(meth)acryloyl-maleoyl]-tricyclo-5.2.1.0.$^{2.6}$-decane, dicyclopentenyloxyethylcrotonate, 3-(meth)acryloyl-oxymethyl-tricylo-5.2.1.0.$^{2.6}$-decane, 3-(meth)cyclopentadienyl(meth)acrylate, and decalyl-2-(meth)acrylate; solketal(meth)acrylate, cyclohexyl(meth)acrylate, phenoxyethyldi(meth)acrylate, methoxyethyl(meth)acrylate, *tert-butyl*(*meth*)*acrylate* and norbornyl(meth)acrylate. According to the present invention methacrylates are preferred over acrylates to be used as at least one reactive diluent such as , 1,2-ethanediol dimethacrylate (EGDMA), 1,4-butanediol dimethacrylate (BDDMA), 1,3-butanediol dimethacrylate, trimethylol propane trimethacrylate (TMPTMA), acetoacetoxyethyl methacrylate, isobornyl methacrylate (IBoMA), tricyclo[5.2.1.0]decandimimethanol dimethacrylate (TCDDMA), bisphenol A methacrylate, trimethylcyclohexyl methacrylate, 2-hydroxyethyl methacrylate, PEG200 dimethacrylate and norbornyl methacrylate. It is preferred that step (a) comprises 1,4-butanediol dimethacrylate.

It is preferred that the reactive resin composition prepared according to the process of present invention comprises at least one reactive diluent, wherein the at least one reactive diluent is selected from a group consisting of 1,4-butanediol dimethacrylate, 2- and 3-hydroxypropyl methacrylate (HPMA), and a mixture of two or more thereof.

In principle, other common radical polymerizable compounds, alone or in mixture with the (meth)acrylic acid esters, can also be used as reactive diluent, e.g. styrene, $\alpha$-methylstyrene, alkylated styrenes such as tert-butylstyrene, divinylbenzene and vinyl and allyl compounds, whereby the representatives of these compounds that are not subject to labelling are preferred. Examples of such vinyl or allyl compounds are hydroxybutyl vinyl ether, ethylene glycol divinyl ether, 1,4-butanediol divinyl ether, trimethylol propanedivinyl ether, trimethylol propane trivinyl ether, mono, di, tri, tetra and polyalkylene glycol ethanol ether, mono, di, tri, tetra and polyalkylene glycol allyl ethers, adipic acid divinyl esters, trimethylol propanedially ethers and trimethylol propane trianelyl ethers.

In case the resin composition, prepared according to the process of the present invention, comprises at least one reactive diluent as outlined above, it is preferred that the amount of the at least one reactive diluent is in the range of from 10 to 60 weight % based on the reactive resin composition, more preferably in the range of from 20 to 50 weight %, more preferably in the range of from 30 to 40 weight %.

It is preferred that the reaction time for step (a) is in the range of from about 20 min to about 160 min, more preferably 40 to 125 min. It is preferred that the reaction time in step (a) is controlled by deactivation of the catalyst. It is preferred that the catalyst in step (a) is deactivated with benyzoyl chloride or other suitable reagents known in the art.

It is preferred that step (a) is carried out at the temperature in the range of from 30 to 80 °C, more preferably in the range of from 40 to 70 °C, more preferably in the range of from 45 to 55 °C.

It is preferred that the equivalent molecular weight of the of the resulting trimer of step (a) is in the range of from 500 to 2500, more preferably in the range of from 800 to 2000.

By controlling the reaction time of step (a) of the process of the present invention it is possible to control the size of the trimerized isocyanurate compounds produced in step (a). Thus, prepolymer 2 (see Table 2 below) would have a larger size compared to the prepolymer 1 and prepolymer 3. In the same manner the NCO content (%) can also be controller, such that at a longer reaction time for step (a) NCO content decreases (see Table 2 below).

<u>Step (b)</u>

Step (b) according to the present invention is reacting the NCO groups of the resulting trimer of step (a) with at least one hydroxy alkyl methacrylate according to formula (I)

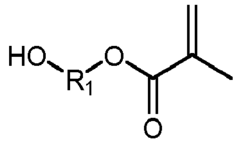

(I).

According to the present invention R1 is a branched or linear aliphatic C1-C15 alkylene group. It is preferred that R1 is substituted branched or liner aliphatic C1-C15 alkylene group. It is preferred that R1 is derived from hydroxyalkyl methacrylates and comprises divalent alkylene groups, such as are obtained by removal of the hydroxyl groups and of the methacrylate group.

In one embodiment, the alkylene group R1 is divalent.

In an alternative embodiment, however, R1 may also be trivalent or polyvalent, so that the compound of formula (I) may also have more than three methacrylate groups, even if this is not directly apparent from formula (I).

Preferably, the alkylene group R1 is a divalent linear or branched C1-C15 alkylene group, preferably a C1-C6 alkylene group and particularly preferably a C1-C4 alkylene group. These include in particular the methylene, ethylene, propylene, *i*-propylene, *n*-butylene, 2-butylene, *sec*.-butylene, *tert*.-butylene, *n*-pentylene, 2-pentylene, 2-methylbutylene, 3-methylbutylene, 1,2-dimethylpropylene, 1,1-dimethylpropylene, 2,2-dimethylpropylene, 1-ethylpropylene, *n*-hexylene, 2-hexylene, 2-methylpentylene, 3-methylpentylene, 4-methylpentylene, 1,2-dimethylbutylene, 1,3-dimethylbutylene, 2,3-dimethylbutylene, 1,1-dimethylbutylene, 2,2-dimethylbutylene, 3,3-dimethylbutylene, 1,1,2-trimethylpropylene, 1,2,2-trimethylpropylene, 1-ethylbutylene, 2-ethylbutylene, 1-ethyl-2-methylpropylene, *n*-heptylene, 2-heptylene, 3-heptylene, 2-ethylpentylene, 1-propylbutylene groups or the octylene group, among which the ethylene, propylene and isopropylene groups are more preferred. In a particularly preferred embodiment of the present invention, R4 is ethylene, propylene or *i*-propylene group.

It is preferred that after the catalyst in step (a) is deactivated with benyzoyl chloride or other suitable reagents known in the art, the reaction mixture of step (b) is brought to a temperature ranging from 40 to 120 °C, more preferably from 60 to 100 °C, more preferably from 75 to 85 °C.

It is preferred that step (b) of reacting the NCO groups of the resulting trimer of step (a) with at least one hydroxy alkyl methacrylate according to formula (I) is carried out in the presence of a tin catalyst (e.g. TIBKAT® 216). It is preferred that the reaction of step (b) is first heated to a temperature as described above, followed by introducing of a tin catalyst.

It is possible to use any suitable catalyst known in the art for the trimerization step (a), such as organometallic catalysts, amines and alkoxides, such as 2-hydroxypropyl-trimethyl-azanium, 3-aminopropyltriethoxysilane, alkali metal carboxylates salts such as potassium-2-ethylhexanoate, and tris-2,4,6-dimethylaminomethyl phenol (DMP-30), organic mannich bases or quaternary amines.

<u>Step (c)</u>

It is preferred that the process for producing a resin composition according to any one of embodiments disclosed herewith, comprises further step:

(c) combining at least one reactive diluent with the resulting functionalized trimer of step (b). The preferred reactive diluents which could be used in step (c) are the same ones as described in regard to step (a) above.

It is preferred that the process of producing of the present invention, and steps (a), (b) and/or (c) thereof are carried out as a sequential one-pot-synthesis, wherein the reagents are added sequential, as disclosed herein, without including a work-up step. In another embodiment, it is preferred that the individual steps (a), (b) and (c) are not carried out as a one-pot synthesis, wherein at least one step (a), (b) or (c) has at least one work-up step.

Present invention also relates to a resin composition comprising at least one compound isocyanurate comprising at least one (C1-C4 alkyl) substituted or unsubstituted benzyl ring and/or comprising at least one (C1-C4 alkyl) substituted or unsubstituted cyclohexyl ring and having a methacrylate functionalization as a base resin produced according to any one of the embodiments disclosed herein.

In case the resin composition comprise at least one reactive diluent as outlined above, it is preferred that the amount of the at least one reactive diluent is in the range of from 10 to 60 weight % based on the reactive resin composition, more preferably in the range of from 20 to 50 weight %, more preferably in the range of from 30 to 40 weight %.

It is preferred that the resin composition according to any one of embodiments comprises at least one inhibitor. The at least one inhibitor would stabilize and adjust the reactivity of the radically curable molecules/base resin. In this regard the at least one inhibitor can be selected from the ones described in regard to step (a) of the process of the present invention.

It is preferred that the resin composition according to any one of the embodiments does not comprise another radically curable compound as a base resin. It is understood that *'reactive* resin' or 'base resin' is a radically curable compound, usually solid or highly viscous, which hardens by polymerization. It is also understood that reactive diluents,

although polymerizable, are not considered as a base resin.

In yet another embodiment, the reactive resin composition comprises other radically curable compounds together with at least one isocyanurate as presently defined. It is preferred that other radically curable compounds are selected from ethylenically unsaturated compounds, compounds with carbon-carbon triple bonds and thiol-yne resins.

Of these compounds, the group of ethylene unsaturated compounds is preferred, which includes styrene and derivatives thereof, (meth)acrylates, vinyl esters, unsaturated polyesters, vinyl ethers, allyl ethers, itaconates, dicyclopentadiene compounds and unsaturated fats, of which unsaturated polyester resins and vinyl ester resins are particularly suitable and are described, for example, in applications EP 1 935 860 A1, DE 195 31 649 A1 and WO 10/108939 A1. Vinyl ester resins are the most preferred due to their hydrolytic resistance and excellent mechanical properties. Particularly preferred vinyl ester resins are epoxy (meth)acrylates, the dimethacrylates of ethoxylated bisphenols, and urethane (meth)acrylates. Vinyl esterurethane resins, especially urethane methacrylates, are particularly preferred. These include the urethane methacrylate resins described in DE 10 2011 017 626 B4 as preferred resins. In this regard, DE 10 2011 017 626 B4, and in particular its description of the composition of these resins, in particular in the examples of DE 10 2011 017 626 B4, is included here by reference.

Examples of suitable unsaturated polyesters that can be used in the reactive resin composition of the invention are divided into the following categories as classified by M. Malik et al. in J. M. S. - Rev. Macromol. Chem. Phys., C40(2 and 3), pp.139-165 (2000):

(1) Ortho resins: based on phthalic anhydride, maleic anhydride or fumaric acid and glycols, such as 1,2-propylene glycol, ethylene glycol, diethylene glycol, triethylene glycol, 1,3-propylene glycol, dipropylene glycol, tripropylene glycol, neopentyl glycol or hydrogenated bisphenol-A;

(2) Iso-resins: these are made from isophthalic acid, maleic anhydride or fumaric acid and glycols. These resins may contain higher proportions of reactive thinners than the ortho-resins;

(3) Bisphenol-A-fumarate: these are based on ethoxylated bisphenol-A and fumaric acid;

(4) HET acid resins (hexachloro-endo-methylene-tetrahydrophthalic acid resins): these are resins obtained from anhydrides or phenols containing chlorine/bromine in the production of unsaturated polyester resins.

In addition to these resin classes, the so-called dicyclopentadiene resins (DCPD resins) can also be distinguished as unsaturated polyester resins. The class of DCPD resins is obtained either by modification of one of the above types of resins by Diels-Alder reaction with cyclopentadiane, or alternatively they are obtained by a first reaction of a diacid, e.g. maleic acid, with dicyclopentadiane, and then by a second reaction, the ordinary production of an unsaturated polyester resin, the latter being called a DCPD maleate resin.

The unsaturated polyester resin preferentially has a molecular weight Mn in the range of 500 to 10,000 daltons, more preferably in the range of 500 to 5,000 daltons, and even more preferably in the range of 750 to 4,000 daltons (according to ISO 13885-1). The unsaturated polyester resin has an acidity in the range of 0 to 80 mg KOH/g resin, preferably in the range of 5 to 70 mg KOH/g resin (according to ISO 2114-2000). If a DCPD resin is used as an unsaturated polyester resin, the acidity value is preferably 0 to 50 mg KOH/g resin.

According to the invention, vinyl ester resins are oligomers or polymers with at least one (meth)acrylate end group, so-called (meth)acrylate-functionalized resins, which also include urethane (meth)acrylate resins and epoxy (meth)acrylates.

Vinyl ester resins, which only have unsaturated groups in the final position, are obtained, for example, by reacting epoxy oligomers or polymers (e.g. bisphenol A-digylcidyl ether, epoxies of the phenol-novolak type or epoxy oligomers based on tetrabromobisphenol A) with, for example, (meth)acrylic acid or (meth)acrylamide. Preferred vinyl ester resins are (meth)acrylate-functionalized resins and resins obtained by reacting an epoxy oligomer or polymer with methacrylic acid or methacrylamide, preferably with methacrylic acid. Examples of such compounds are known from US 3297745 A, US 3772404 A, US 4618658 A, GB 2217722 A1, DE 3744390 A1 and DE 4131457 A1. In this context, reference is made to application US 2011/0071234 A1.

The vinyl ester resin preferentially has a molecular weight Mn in the range of 500 to 3,000 daltons, more preferably 500 to 1,500 daltons (according to ISO 13885-1). The vinyl ester resin has an acidity in the range of 0 to 50 mg KOH/g resin, preferably in the range of 0 to 30 mg KOH/g resin (according to ISO 2114-2000).

Ethoxylated bisphenol-A-di(meth)acrylate with an ethoxylation degree of 2 to 10, preferably from 2 to 4, difunctional, trifunctional or highly functional urethane (meth)acrylate oligomers or mixtures of these hardenable/polymerizable components are particularly suitable as vinyl ester resins.

Examples of such epoxy (meth)acrylates are those of formula (i)

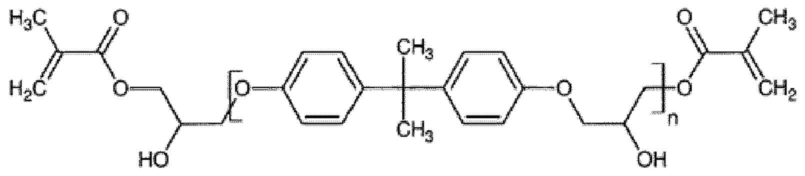

(i),

where n stands for a number greater than or equal to 1 (if there are mixtures of different molecules with different n-values and are represented by the formula (i), non-integer numbers are also possible as an average).

Other examples of propoxylated or, in particular, ethoxylated aromatic diols, such as bisphenol-A-, bisphenol-F or novolak (especially di-)(meth)acrylates, are those of formula (II)

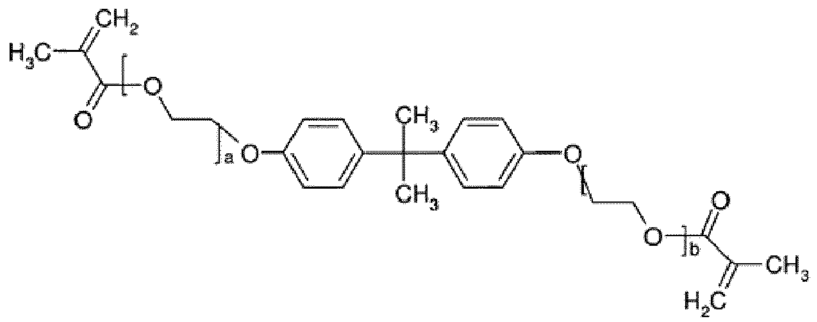

(II),

where a and b stand independently of each other for a number greater than or equal to 0, with the proviso that preferably at least one of the values is greater than 0, preferably both are 1 or greater (if mixtures of different molecules with different (a and b) values are present and are represented by the formula (II), non-integer numbers are also possible as an average).

Particularly suitable are the well-known reaction products of di- or polyisocyanates and hydroxyalkyl methyl acrylates, as described for example in DE 2 312 559 A1, adducts of (di)isocyanates and 2,2-propane-bis-[3-(4-phenoxy)-1,2-hydroxypropane-1 methacrylate] according to USPS 3 629 187 as well as the adducts of isocyanates and methacryloylalkyl ethers, alkoxybenzenes or alkoxycycloalkanes, as described in EP 0 044 352 A1. In this context, reference is made to DE 2312559 A1, DE 19902685 A1, EP 0 684 906 A1, DE 4111828 A1 and DE 19961342 A1. Of course, mixtures of suitable monomers can also be used.

All these resins which can be used according to the invention can be modified according to the process known to the skilled person, for example to obtain lower acid numbers, hydroxide numbers or anhydride numbers, or be made more flexible by introducing flexible units into the backbone, and the like.

In addition, the resin may contain other reactive groups that can be polymerized with a radical initiator, such as peroxides, for example reactive groups derived from itaconic acid, citraconic acid and allylic groups and the like, as described, for example, in WO 2010/108939 A1 (itaconic acid ester).

In case the reactive resin composition comprises at least one other radically curable compound that is not produces according to the process of present invention as a base resin, it is preferred that the amount of said radically curable compound is in the range of from 30 to 80 weight % based on the total weight of the reactive resin composition, more preferably in the range of from 50 to 70 weight %, more preferably less than about 40% by weight, more preferably less than 30 weight %.

It is preferred that the resin composition according to any one of embodiments further comprises at least one accelerator. Suitable accelerators for the resin composition according to the present invention are described below in regard to hardener system.

According to the present invention the resin composition can comprises at least one reactive diluent and/or at least one inhibitor and/or at least one accelerator and at least one co-accelerator in an amount ranging from 20 to 90 weight % based on the total weight of the resin composition, more preferably from 40 to 80 weight %, more preferably from 60 to 70 weight %.

In another embodiment it is also preferred that the resin composition comprises at least one filler, more preferably at least one inorganic filler. The preferred fillers used in the resin composition are the same as the ones disclosed below in regard to a reactive resin component (A).

According to the present invention it is noted that some substances can be used both as a filler and/or as an additive. For example, when fumed silica is polar and non-post-treated is more likely to serve as a filler. On the other hand, when silica is non-polar and post-treated it is used more as an additive. In cases where exactly the same substance can be

used as a filler or an additive, it is preferred that the total amount of said substance does not exceed the upper limit for fillers set forth herein.

It is preferred that the resin composition of the present invention further comprises at least one co-accelerator selected from the group consisting of benzyl alcohols, tertiary amines, novolaks, imidazoles, tertiary aminophenols, styrenized phenols, organophosphines, Lewis bases, Lewis acids, organophosphates and combinations or two or more thereof, preferably the at least one co-accelerator is selected from the group consisting of 2,4,6-tris(dimethylaminomethyl) phenol, 2,4,6-tris(dimethylamino)phenol and bis[(dimethylamino)methyl]phenol, more preferably the at least one co-accelerator contains a mixture of 2,4,6-tris(dimethylaminomethyl)phenol and bis(dimethylaminomethyl)phenol. Mixtures of this kind are commercially available, for example as Ancamine® K54 (Evonik, Germany).

In case where the resin composition comprises at least one co-accelerator, it is preferred that the amount of the at least one co-accelerator is in the range of from 0.001 to 5 weight % based on the total weight of the resin composition, preferably in the range of from 0.01 to 1 weight %, more preferably 0.1 to 0.5 weight %.

Present invention further relates to a multi-component reactive resin system, comprising: a reactive resin component (A) comprising the resin composition according to any one of embodiments disclosed herein and a curing component (B).

It is preferred that the reactive resin component (A) comprises at least one filler, preferably an inorganic filler. In case where the reactive resin component (A) comprise at least one filler, it is preferred that the at least one filler is selected from a mineral filler, mineral-like filler, quartz, glass, sand, quartz sand, quartz powder, porcelain, corundum, ceramics, talc, silica (e.g. fumed silica, especially polar, non-post-treated fumed silica), silicates, aluminium oxides (e.g. alumina), clay, titanium dioxide, chalk, barite, feldspar, basalt, aluminium hydroxide, granite, sandstone, polymeric fillers, such as thermosets, hydraulically curable fillers, such as gypsum, quicklime or cement (e.g. aluminate cement (often referred to as alumina cement) or Portland cement), metals such as aluminum, carbon black, wood, mineral or organic fibres, or the like, or mixtures of two or more thereof.

According to the present invention the at least one filler used in the reactive resin composition or the reactive resin component (A) can be in any form, for example as powder or flour, or as molded bodies, e.g. in cylindrical, ring, sphere, platelet, rod, saddle or crystal form, or also in fibrous form (fibrillar fillers). It is preferred that the corresponding basic particles preferably have a maximum diameter of about 10 mm and a minimum diameter of about 1 nm. It is preferred that the diameter of the filler particle is about 10 mm, or any value of less than about 10 mm, but more than about 1 nm. It is preferred that the maximum diameter of the filler particle is about 5 mm, preferably about 3 mm, more preferably about 0.7 mm, more preferably about 0.5 mm. It is preferred that the minimum diameter of the filler particle is about 10 nm, more preferably about 50 nm, more preferably about 100 nm. Diameter ranges resulting from a combination of these maximum diameters and minimum diameters are particularly preferred. However, the globular, inert substances (spherical shape) have a preferential and more clearly reinforcing effect. Core shell particles, preferably spherical, can also be used as fillers.

It is preferred that the at least one filler comprised in the reactive resin component (A) is selected from the group consisting of cement, silica, quartz, quartz sand, quartz powder and mixtures of two or more thereof. For the reactive resin component (A), fillers selected from the group consisting of cement, fumed silica, especially untreated, polar fumed silica, quartz sand, quartz powder and mixtures of two or more thereof are particularly preferred. A mixture of cement (aluminate cement (often referred to as alumina cement) or Portland cement), fumed silica and silica sand is particularly preferred for the reactive resin component.

In case where the reactive resin component (A) comprises at least one filler it is preferred that the at least one filler is selected from fumed silica, quartz sand, calcium aluminate cement, silica sand and mixtures of two or more thereof. It is preferred that the reactive resin component (A) comprises at least one filer in an amount ranging from 0.01 to 85 weight % based on total weight of the reactive resin component (A), preferably in the range of from 20 to 80 weight %, more preferably in the range of from 50 to 70 weight %, more preferably in the range of from 60 to 75 weight %.

A hardening agent is used to harden the radically hardenable compound(s).

Preferably, a hardener system is used, which includes at least one curing agent/initiator and at least one accelerator. It is preferred that at least one accelerator is comprised in the resin composition according to the present invention or reactive resin component (A) of the present invention and the at least one initiator is comprised in the curing component (B).

Outlined below are several possible hardener systems that would be appropriate to use as part of the multi-component reactive resin system according to the present invention.

In one embodiment it is preferred that the hardener system comprises:

- at least one peroxide (initiator) and
- at least one accelerator.

All peroxides that are used for curing epoxy(meth)acrylate resins can be used. Such peroxides include organic peroxides, inorganic peroxides, and hydrogen peroxides. Peroxides can be either liquid or solid form. Examples of suitable

peroxides are peroxycarbonates (of the formula OC(O)OO-), peroxyesters (of the formula -C(O)OO-), diacyl peroxides (of the formula -C(O)OOC(O)-), dialkyl peroxides (of the formula -OO-), hydroperoxides (of the formula -OOH) and the like. These suitable peroxides can be present as oligomers or polymers. A comprehensive set of examples of suitable peroxides is described, for example, in application US 2002/0091214 A1, paragraph [0018].

It is preferred that the curing component (B) comprises organic peroxides. Suitable organic peroxides are selected from tertiary alkyl hydroperoxides, such as tert-butyl hydroperoxide, and other hydroperoxides, such as cumene hydroperoxide, peroxy esters or peracids, such as tert-butyl peresters (e.g. tert-butyl peroxybenzoate), benzoyl peroxide, peracetates and perbenzoates, lauroyl peroxide, including (di)peroxyesters, perethers, such as peroxydiethyl ether, perketones, such as methyl ethylketone peroxide and combinations of two or more thereof. The organic peroxides used as hardeners/curing agents are often tertiary peresters or tertiary hydroperoxides, i.e. peroxide compounds with tertiary carbon atoms that are directly bound to a -O-O-acyl or OOH group. However, mixtures of these peroxides with other peroxides can also be used according to the invention. The peroxides can also be mixed peroxides, i.e. peroxides that have two different peroxide-bearing units in one molecule. In a preferred embodiment, benzoyl peroxide (BPO) or tert-butyl peroxybenzoate is used for curing/hardening.

The peroxide can be used in its pure form or as a component of a mixture. Typically, it is used as a component of a mixture, specifically as a component of a curing component (B) of a reactive resin system, as described in more detail below. The curing component (B) used in the examples, or a curing component comprising the same or similar ingredients is particularly preferred.

It is preferred that the curing component (B) comprises at least one organically substituted ammonium persulfate, such as N'N'N'N'-tetrabutylammonium persulfate and/or N'N'N'-tricapryl-N'-methylammonium persulfate.

In addition to the peroxide, the curing component (B) may also contain a phlegmatizing agent to stabilize the peroxide. Corresponding phlegmatizing agents are known from DE 32 26 602 A1, EP 0 432 087 A1 and EP 1 371 671 A1.

In another embodiment the curing component (B) comprises water as a phlegmatizing agent. In addition to water, the curing component (B) may also comprise other phlegmatizing agents. It is preferred that water is the sole phlegmatizing agent.

It is preferred that the curing component (B) comprises the at least one peroxide together with the water as a suspension. Corresponding suspensions are commercially available in different concentrations, such as the aqueous dibenzoyl peroxide suspensions BP-40-SAQ (United Initiators), Perkadox® 40L-W (Nouryon), Luperox® EZ-FLO (Arkema) or Peroxan BP-40 W (Pergan).

In alternative embodiments, the at least one peroxide is present with a phlegmatizing agent as a powder or paste. Corresponding compositions are commercially available in different concentrations, such as Perkadox® 20S (Akzo Nobel) or Benox B-50 (United Initiators).

It is preferred that the curing component (B) comprises at least one peroxide in an amount ranging from 0.1 to 35 weight % based on the total weight of the curing component (B), preferably from 0.25 to 35 weight %, more preferably from 1 to 30 weight %, especially preferably from 5 to 28 weight %.

It is preferred that the curing component (B) according to any one of the embodiments described herein further comprises at least one accelerator. It is also preferred that at least one accelerator is comprised in the resin component (A) of the multi-component reactive resin system.

Preferred at least one accelerated is selected from compounds described in application US 2011/0071234 A1: dimethylamine, trimethylamine, ethylamine, diethylamine, triethylamine, n-propylamine, di-n-propylamine, tri-n-propylamine, isopropylamine, diisopropylamine, triisopropylamine, n-butylamine, isobutylamine, tert-butylamine, di-n-butylamine, diisobutylamine, tri-isobutylamine, pentylamine, isopentylamine, diisopentylamine, hexylamine, octylamine, dodecylamine, laurylamine, Stearylamine, Aminoethanol, Diethanolamine, Triethanolamine, Aminohexanol, Ethoxyaminoethane, Dimethyl(2-chloroethyl)amine,2-Ethylhexylamine, Bis(2-chloroethyl)amine, 2-Ethylhexylamine, Bis(2-ethylhexyl)amine, N-Methylstearylamine, Dialkylamine, Ethylenediamine, N,N'-Dimethylethylenediamine, Tetramethylethylenediamine, Diethylenetriamine, Permethyldiethylenetriamine, Triethylenetetramine, Tetraethylene Pentamine, 1,2-Diaminopropane, Di-propylenetriomine, Tripropylenetetramine, 1,4-Diaminobutane, 1,6-Diaminohexane, 4-Amino-1-diethylamine opentane, 2,5-Diamino-2,5-dimethylhexane, Trimethylhexamethylenediamine, N,N-dimethylaminoethanol, 2-(2-diethylaminoethoxy)ethanol, Bis(2-hydroxyethyl)oleylamine, Tris-[2-(2-hydroxy-ethoxy)-ethyl]amine, 3-amino-1-propanol, methyl(3-aminopropyl)ether, ethyl-(3-aminopropyl)ether, 1,4-butanediol-bis(3-aminopropyl)ether, 3-dimethylamino-1-propanol, 1-amino-2-propanol, 1-Diethylamino-2-propanol, Diisopropanolamine, Methyl-bis(2-hydroxypropyl)amine, Tris(2-hydroxypropyl)amine, 4-amino-2-butanol, 2-amino-2-methylpropanol, 2-amino-2-methyl-propanediol, 2-amino-2-hydroxymethylpropanediol, 5-diethylamino-2-pentanone,3-methylaminopropionic acid nitrile, 6-aminohexanoic acid, 11-aminoundecanoic acid, 6-aminohexanoic acid ethyl ester, 11-aminohexanoic acid isopropyl ester, cyclohexylamine, N-methylcyclohexylamine, N,N-dimethylcyclohexylamine, dicyclohexylamine, N-ethylcyclohexylamine, N-(2-hydroxyethyl)-cyclohexylamine, N,N-bis-(2-hydroxyethyl)-cyclohexylamine, N-(3-aminopropyl)-cyclohexylamine, aminomethylcyclohexane, hexahydrotoluidine, hexahydrobenzylamine, aniline, N-methylaniline, N,N-dimethylaniline,N,N-diethylaniline, N,N-di-propylaniline, iso-butylaniline, toluidine, diphenylamine, hydroxyethylaniline, bis(hydroxyethyl)aniline, chloroaniline, aminophenols, Aminobenzoic acids and their esters, benzylamine, dibenzylamine, tribenzylamine, methyldibenzylamine, α-phenylethylamine, xylidine, diisopropylaniline, dodecylaniline, aminonaphthalene, N-methylaminonaphthalene, N,N-dimethylaminonaphthalene, N,N-dibenzylnaphthalene, diaminocyclohexane, 4,4'-diamino-dicyclohexylmethane, diamino-dimethyl-dicyclohexylmethane, phenylenediamine, xylylenediamine, diaminobiphenyl, naphthalenediamine, benzidine, 2,2-bis-(aminophenyl)-propane, Aminoanisols, amino-thiophenols, aminodiphenyl ethers, aminocresols, morpholine, N-methylmorpholine, N-phenylmorpholine, hydroxyethylmorpholine, N-methylpyrrolidine, pyrrolidine, piperidine, hydroxyethylpiperidine, pyrroles, pyridines, quinolines, indoles, indolenins, carbazoles, pyrazoles, imidazoles, thiazoles, pyrimidines, quinoxalines, aminomorpholine, dimorpholinethane, [2,2,2]-diazabicyclooctane and N,N-dimethyl-p-toluidine.

Preferred amines are symmetrically or asymmetrically substituted aniline and toluidine derivatives and N,N-bis(hydroxy)alkylarylamines, such as N,N,N,dimethylaniline, N,N-diethylaniline,N,N-dimethyl-p-toluidine, N,N-bis(hydroxyalkyl)arylamine, N,N-bis(2-hydroxyethyl)aniline, N,N-bis(2-hydroxyethyl)toluidine, N,N-bis(2-hydroxypropyl)aniline, N,N-bis(2-hydroxypropyl)-p-toluidine, N,N-bis(3-methacryloyl-2-hydroxypropyl)-p-toluidine, N,N-dibutoxyhydroxypropyl-p-toluidine, N-methyl-N-hydroxyethyl-p-toluidine, N-ethyl-N-hydroxyethyl-p-toluidine, as well as the analogues o- or m-toluidine and 4,4'-bis(dimethylamino)diphenylmethane and/or the leucoforms of the dyes crystal violet or malachite green.

Polymeric amines, such as those obtained by polycondensation of N,N-bis(hydroxyalkyl)aniline with dicarboxylic acids or by polyaddition of ethylene oxide and these amines, are also suitable as accelerators.

Preferred accelerators are N,N-bis(2-hydroxypropyl)toluidine, N,N-bis(2-hydroxyethyl)toluidine, and para-toluidine ethoxylate (bisomer® PTE).

It is also preferred that the multi-component reactive resin system of the present invention comprises at least one accelerator in an amount ranging from 0.01 to 10 weight % based on the total weight of the multi-component reactive resin, preferably from 0.1 to 5 weight %, especially preferably from 0.1 to 3 weight %.

In another embodiment the hardener system is peroxide-free and comprises:

- at least one manganese compound as an accelerator and
- a 1,3-dioxo compound as an initiator.

Such curing component systems are described in DE 10 2011 078 785 A1.

Suitable 1,3-dioxo compounds are compounds of the general formula (III)

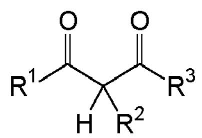

(III),

in the

$R^1$ and $R^3$ are, independently of each other, an unbranched or branched C1-C4 alkyl group or a C1-C4 alkoxy group, $R^2$ is an unbranched or branched, possibly substituted C1-C4 alkyl group or a C1-C4 alkoxy group, or together with $R^1$ or $R^3$ forms a five- or six-membered aliphatic ring, possibly substituted, which may include heteroatoms in or around the ring.

In this hardening system, it is essential that in the compound of formula (III), the carbon atom that binds the two carbonyl groups together has exactly one hydrogen atom bound to this carbon atom.

From the group of compounds of the general formula (III), a compound of formula (IV) is preferred

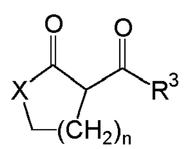

(IV),

in which X = $CH_2$, O, n = 1, 2 and $R^3$ is an unbranched or branched, possibly substituted C1-C4 alkyl group or a C1-C4 alkoxy group. X is more preferred, O. n is more preferred, 1. $R^3$ is more preferred, a C1-C4 alkyl group is more preferred.

It is preferred that compounds of formula (III) are selected form 2-methyl-2,4-pentanedione, α-acetylbutyrolactone, cyclopentanone-2-carboxylic acid ester, cyclopentanone-2-carboxylic acid methylester, and mixtures of two or more thereof, more preferably compound of formula (III) is α-acetylbutyrolactone.

A manganese compound, in particular a manganese salt or a manganese complex, is used as an accelerator. Mixtures of manganese salts and/or manganese complexes can also be used.

Manganese salts or manganese complexes, especially based on 1,3-dioxo compounds, such as acetylacetonate (pentane-2,4-dione), and carboxylic acids, such as naphthenates, octoates, ethylhexanoates or saturated fatty acids, have proven to be particularly suitable. There are no restrictions on the manganese compound. Conveniently, manganese compounds are generally soluble in non-polar solvents. Mn(II)-octoate is particularly preferred.

In yet another embodiment, the hardener system comprises:

- at least one metal salt as an accelerator and
- at least one compound containing thiol and/or thiol ester groups as an initiator.

Radicals formed by mixing said two ingredients can trigger polymerization of nonaromatic double bonds, e.g. olefinic double bonds, e.g. acrylates or methacrylates.

Examples of thiols are thioglycerin, methyl, ethyl mercaptan and higher homologues e.g. dodecyl mercaptan; dimercaptans, such as dimercaptopropanesulfonic acid, dimercaptosuccinic acid, dithiothreitol; poly(ethylene glycol) dithiols of the general formula $HS-[CH_2-CH_2-O]_n-CH_2-CH_2-SH$, where n stands for a number between 0 and 10; liquid polysulphide polymers with thiol end groups, e.g. thioplast G types from Akzo Nobel; Polymer captan hardeners and crosslinkers, e.g. SIQ-Amin 999 from S.I.Q.-Kunstharze GmbH; ethoxylated and/or propoxylated alcohols of mono-, di-, tri-, tetra-, pentaols and/or other polyols with thiol-end groups, e.g. Capcure 3-800 from Cognis, or the compounds listed below as particularly suitable thiols. A particularly suitable thiol ester is the octanthiolic acid-*S*-[3(triethoxysilyl)propyl] ester. Examples of thiols that are particularly suitable are glycoldi(3-mercaptopropionate), trimethylolpropantri(3-mercaptopropionate), pentaerythritoltetra(3-mercaptopropionate), dipentaerythritolhexa-3-mercaptopropionate, ethoxylated trimethylolpropane-tris(3-mercaptopropionate) with different ethoxylation degrees (e.g. ETTMP 700 and ETTMP 1300 from Bruno Bock), tris[2-(3-mercaptopropionyloxy)ethyl]isocyanurate,3-mercaptopropyltrimethoxysilane.

As a further alternative embodiment the hardener system comprises:

- at least one metal salt as an accelerator and
- at least one CH-acid compound of the formula (V) as initiator

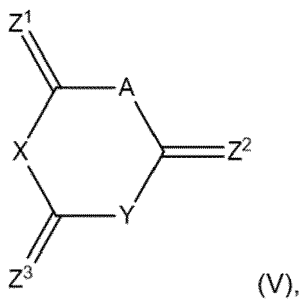

(V),

wherein

(i)

-A- stands for -C(R1)(R2)-,
-X- stands for a bond, -NR3-, $-(CR4R5)_p-$ or -O-,
-Y- stands for -NR6-, $-(CR7R8)_q-$ or -O-,
where, if X stands for O, Y also stands for O;
where X stands for $(CR4R5)_p$ and Y stands for CR7R8,
or X stands for NR3 and Y for NR6,
Z1 stands for O, S, S=O or $S(=O)_2$ ,
Z2 stands for O, S, S=O or $S(=O)_2$ ,
Z3 stands for O, S, S=O or $S(=O)_2$ or for R9 and R10,
p stands for 1, 2 or 3, preferably 1 or 2,
q stands for 1, 2 or 3, preferably for 1,
and the residues R1, R2, R3, R4, R5, R6, R7, R8, R9 and R10 stand independently of each other for hydrogen, alkyl, aryl, aralkyl, cycloalkyl or cycloalkylalkyl and are each unsubstituted or substituted and/or have heteroatoms (instead of C atoms; preferably selected from O, N, as NH or N-alkyl, and S), provided that

at least one of the residues R1 and R2 means hydrogen,

or

(ii) open-chain connections,

in which the link forming the bridge -C(=Z3)- is missing,

-A- stands for-C(R1)(R2)-, X and Y independently of each other for a C1-C4 alkyl group or C1-C4 alkoxy group, each of which is unbranched or branched, unsubstituted or substituted, where appropriate heteroatoms (instead of C atoms; in particular selected from O, N, such as NH or N-alkyl, and S), or preferably for an unsubstituted or substituted, possibly heteroatom (instead of C atoms; in particular selected from O, N, as in NH or N-alkyl, and S) having C1-C4 alkoxycarbonylmethyl group or C1-C4 alkylcarbonylmethyl group;

R1 and R2 both mean hydrogen, and

Z1 and Z2 have the meanings mentioned;

orX stands for a C1-C4 alkyl group or C1-C4 alkoxyl group or C1-C4 alkoxy group or C1-C4 alkoxy group or C1-C4 alkoxymethyl group or C1-C4 alkoxycarbonylmethyl group or C1-C4 alkylcarbonylmethyl group or C1-C4 alkylcarbonylmethyl group,

Y and Z2 together with the binding carbon atom -CN,

Z1 has the above meanings, and

R1 and R2 are respectively defined as above, with the proviso that at least one of the residues means hydrogen;

and/or salts thereof.

Preferred examples of such compounds are barbituric acid (2,4,6-pyrimidine trione), 2,4,6-pyrimidine trione derivatives such as 1-benzyl-5-phenylbarbituric acid (1-(phenylmethyl)-5-phenyl-2,4,6-pyrimidine trione), 5-butylbarbituric acid (5-butyl-2,4,6-pyrimidine trione), 1-cyclohexyl-5-ethylbarbituric acid (1-cyclohexyl-5-ethyl-2,4,6-pyrimidine trione) or 2-thiobarbituric acid(4,6-dihydroxy-2-mercaptopyrimidine), 1,3-cyclohexanedione, 2-methyl-1,3-cyclohexanedione, 1,3-cyclopentanedione, 2-methyl-1,3-cyclopentanedione, 4,4-dimethyl-1,3-cyclohexanedione, 5,5-dimethyl-1,3-cyclohexanedione (dimedone), 2,2-dimethyl-1,3-dioxane-4,6-dione or 2,2,5-trimethyl-1,3-dioxane-4,6-dione, 3-oxoglutaric acid dimethyl ester, and/or diethyl-1,3-acetone dicarboxylate, ethyl cyanoacetate, methyl cyanoacetate or 2-ethylhexyl cyanoacetate, or in DE 10 2011 078 785 A1 called 1,3-dioxo compounds.

In both cases, the components used as accelerators in the form of a metal salt, including metal complexes and metal oxides, are preferably one or more metal salts and, in particular, salts of organic and/or inorganic acids with metals, e.g. selected from cobalt, zirconium, zinc, cerium, tin, bismuth or preferably vanadium, manganese, copper or iron, or mixtures of two or more thereof, with the organic acids preferably saturated, with preference given to vanadium and iron or, in particular, manganese and copper, possibly in the presence of one or two metal-containing co-accelerators from the group of metals mentioned above, in particular in the form of salts or complexes with inorganic acids and/or carboxylate residues, such as carboxylates with $CH_3$, C2-C20 alkyl, a C6-C24 aryl residue or C7-C30 aralkyl residue, e.g. octoate, e.g. 2-ethyl hexanoate (isooctanoate), neodecanoate, or acetylacetonate. Manganese carbonate or carboxylates, such as manganese acetate or manganese caprylate, copper carboxylates, such as copper caprylate or copper naphthenate, copper quinolates, iron carboxylates, such as iron caprylate and/or vanadium carboxylates, and/or the group of metal salts with inorganic acids, which include, for example, ferric chloride, ferrous sulphate and copper chloride, are particularly preferred.

In another alternative embodiment, the hardener system comprises:

- at least one metal salt as an accelerator and
- at least one aldehyde and/or one ketone and at least one primary amine as initiator, and/or
- at least one imin containing one or more imin structure increments of formula (VI):

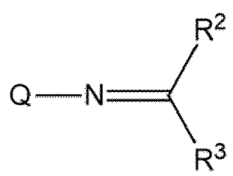

(VI),

wherein independently of each other

Q represents the organic residue of the amine used, or stands for hydrogen; and

R2 and R3 means independently hydrogen and/or an unsubstituted or substituted organic residue containing double bonds and/or heteroatoms, single or multiple branched or straight-chain, containing at least one aliphatic, heteroaliphatic, alicyclic or heterocyclic molecular structure, or a combination of two or more of the aforementioned molecular structures;

and/or salts thereof.

Preferably, the molecular weight of the imin-structure increments of the formula (VI) containing imines is 2000 daltons (g/mol) or lower, e.g. 1000 daltons or lower. The aldehydes and/or ketones also preferentially have molecular weights in these ranges.

The aldehydes, ketones, amines, aldimines or ketimines contained or used are known or can be produced/obtained according to known processes or are preferably obtained afterwards. The imines can be synthesized or preserved before use (e.g. for fastening anchoring elements) or only "in situ". Thus, possible methods according to the invention are (t) separate prior preparation and/or (tt) "in situ" preparation, in which the aldehyde/ketone and the primary amine are divided into different components of the fastening system and mixed, for example, at the site of application, and/or (ttt) the "in situ". Manufactured in a component of the fastening system where the aldehyde/ketone and the primary amine are mixed together in the preparation of each component. In particular, the imines referred to in (t) are obtained by condensation by separating water from one or more amine(s) with one or more aldehyde(s) or ketones. Corresponding reaction conditions for the separate prior conversion (t) are known to the skilled person.

Examples of suitable amines and aldehydes or ketones can be found in DE 10 2004 035 542 A1, EP 1 329 469 A1, EP 1 975 190 A1 and EP 2 017 260 A1.

The primary amines added as such or suitable for the synthesis of imines, for example, include, for example, monoamines, diamines or polyamines, or mixtures of two or more thereof. The monoamines, diamines and/or polyamines that can be used can be both linear and branched. The molecular framework of mono- and/or di- and/or polyamines may contain aliphatic, heteroaliphatic, alicyclic, heterocyclic, aromatic, aliphatic-aromatic and silane/siloxane molecular structures, or two or more independently selected ones. Primary and/or secondary and tertiary amino groups may be present in the molecule, but at least one primary amino group ($-NH_2$) must be present for the formation of aldimine or ketimin.

The mono-, di- or polyamines are preferably from the group of alkyl- or alkylene (mono or di)amines (such as 2-methylpentandiamine, or 2,2,4- or 2,4,4-trimethylhexamethylenediamine), heteroalkyl or heteroalkylene (mono or di) amines (such as 1,13-diamino-4,7,10-trioxatridecane, commercially available amine-functionalized polyoxyalkylenes [Jeffamine] from Huntsman Corp, or e.g. triethylenetetramine and/or higher homologues), cycloalkyl or cycloalkylene (mono or di)amines (e.g. isophoronediamine, 1,3-bisaminomethylcyclohexane, TCD-diamine), heterocycloalkyl or heterocycloalkylene (mono or di)amine (e.g. aminoethylpiperazine), aminols or amino alcohols (e.g. 1,3-diaminopropane-2-ol), and aliphatic-aromatic (mono or di)amines (such as 1,3- or 1,4-benzenedimethanamine), selected and/or from the group of aminosilanized fillers.

Furthermore, the monoamines, diamines or polyamines from the group of aminoamides, polyaminoamides, Mannich bases and amine adducts (epoxy-amine adducts as described in EP 0 387 418 A2, isocyanate-amine adducts [e.g. from amino groups that have not been reacted to the imine synthesis or from the above-mentioned aminols - when using the aminols, the conversion to the imin and then the addition to the isocyanate is preferable], Bucherer Adducts and Michael Addition Adducts).

Also of particular interest as amines are aminoalkyl silanes, which contain at least one hydrolyzable group, such as alkoxy, e.g. methoxy or ethoxy - bound to silicon. These can hydrolyze and condense (through the formation of reaction water or added water) to form oligomers that carry several amino groups and meet the REACH definition for polymers. Imines from such aminoalkyl silanes therefore form the basis for particularly preferred compounds. For example, preferred aminoalkyl silanes are selected from the group comprising one or more of the following compounds: aminoalkyl tri- or dialkoxysilanes, such as 3-aminopropyl-trimethoxysilane or 3-aminopropyltriethoxysilane, and N-(aminoalkyl)aminoalkyltri- or dialkoxysilane, such as N-(2-aminoethyl)-3-aminopropyltrimethoxysilane or N-(2-aminoethyl)-3-aminopropylmethyldimethoxysilane, furthermore ureidoalkyltrimethoxysilane, such as 3- Ureidopropyltrimethoxysilane.

Furthermore, aminosilanized fillers that carry primary amino groups, such as aminosilane-treated quartz powder (e.g. Silbond AST(R) from Quarzwerke GmbH), aminosilane-treated silica (e.g. Aktisil AM(R) from Hoffmann Mineral), or aminosilane-treated fumed silica, can be used as polyamines.

The aldehydes and ketones added as such or which can be used or suitable for the synthesis of aldimines and/or ketimines are, in particular, those of formula (VII)

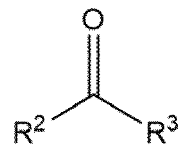

(VII),

wherein

R2, R3 independently means hydrogen and/or an unsubstituted or substituted and/or single- or multiple-branched or straight-chain organic residue containing double bonds and/or heteroatoms, which may include aliphatic, heteroaliphatic, alicyclic, heterocyclic molecular structures and/or combinations of the aforementioned molecular structures.

Preferably, the aldehydes and/or ketones are compounds that have at least one or more (primary and/or secondary) hydrogen atom(s) on the carbon atom alpha-permanent to the carbonyl group. Examples of such aldehydes are propanal, valeraldehyde, isovaleraldehyde, or methoxyacetaldehyde, or 3,7-dimethyl-6-octenal (citronellal) or 3,7-dimethyl-7-hydroxyoctanal (hydroxycitronellal). Examples of such ketones include methyl isobutyl ketone, acetone, methylethylketone or 6-methyl-5-hepten-2-one.

Aldehydes and/or ketones are particularly preferential compounds that have a double bond and/or branching at the carbon atom alpha-permanent to the carbonyl group. As a result, the particularly preferred aldehydes and/or ketones have only one (tertiary) hydrogen atom on the carbon atom alpha-permanent to the carbonyl group. Examples of particularly preferred aldehydes are isobutyl aldehyde, 2-ethylhexanal, 2-methylbutanal, 2-ethylbutanal, 2-methylvaleraldehyde, 2,3-dimethyl-valeraldehyde, cyclohexylcarboxaldehyde, or 3,7-dimethyl-2,6-octadienal (citral), 3-(4-tert-butylphenyl)-2-methylpropanal (Lilial, Lysmeral), tetrahydrofuran-3-carboxaldehyde, tetrahydro-2-furancarboxaldehyde, 4-formyltetrahydropyrane, tetrahydro-2H-pyran-2-carbaldehyde or tetrahydro-pyran-3-carbaldehyde. Examples of particularly preferred ketones are diisopropyl ketone, 3-methyl-2-pentanone, 2-methylcyclohexanone or beta-ionones.

The above examples of suitable amines, preferred and particularly preferred aldehydes and/or ketones are not intended to limit the range of suitable amines, aldehydes and/or ketones, but only to show some example compounds with the above-mentioned structural features defined as suitable, preferred and particularly preferred for illustrative purposes.

In particular, the aldehydes, ketones or synthesized aldimines and/or ketimines mentioned in the examples and the specific amines, ketones and aldehydes, or mixtures of two or more of them, added as such and/or used for the synthesis of aldimines and/or ketimines, are also preferred.

The hardener system can be available as a ready-made hardener composition (e.g. with microencapsulated components, can be formed as a curing component (B)) or preferably only formed when mixed with other components of a synthetic resin composition (as a kind of composition (mixture)), for example when used, such as mixing a reactive resin component (A) and a curing component (B) according to any embodiments of the present invention.

It is preferred that the curing component (B) comprises fillers and/or additives. Suitable fillers may be the same as described in regard to reactive resin compound (A). It is preferred that the curing component (B) comprises silica and/or pyrogenic silica.

It is preferred that the multi-component reactive resin system according to any one of embodiments disclosed herein is in a form of a two-component system consisting of component (A) and component (B). It is preferred that components (A) and (B) are mixed in a ratio of component (A) to component (B) from 20:1 to 1:10, especially preferably from 10:1 to 3:1.

Present invention also relates to a mortar composition comprising the multi-component reactive resin system according to any one of embodiments disclosed herein.

Present invention also relates to a use of resin composition as base resin according to any one of embodiments disclosed herein in a multi component reactive resin system for anchoring means to improve load values at high temperatures, preferably at 80 °C.

Present invention also relates to a method for the chemical fastening of construction elements in boreholes, wherein the mortar composition according to any one of embodiments disclosed herein or the multi component epoxy resin material according to any one of embodiments disclosed herein is used for the chemical fastening.

Component (A) and component (B) as described herein can be discharged out of the separate chambers and mixed in a suitable device, for example a static mixer or dissolver. The mixture of component (A) and component (B) is then introduced into the previously cleaned borehole, preferably dry borehole, by means of a known injection device. The component to be fixed is then inserted into the mortar composition and aligned. The method according to the present invention is particularly suitable for the structural adhesion of concrete/concrete, steel/concrete or steel/steel or one of said materials with other mineral materials, for structural strengthening of components made of concrete, brickwork and other mineral materials, for reinforcement applications with fiber-reinforced polymers of building objects, for chemical fastening of surfaces made of concrete, steel or other mineral materials, in particular chemical fastening of construction elements and anchoring means, such as anchor rods, anchor bolts, (threaded) rods, (threaded) sleeves, reinforcing bars, screws and the like, in boreholes in various substrates, such as (reinforced) concrete, brickwork, other mineral materials, metals

(e.g. steel), ceramics, plastics, glass, and wood. The method according to the invention is very particularly preferably used for the chemical fastening of anchoring means.

All embodiments of the present invention as described herewith can be combined with one another within the scope of the present invention. Further advantages of the invention can be also found in the following examples, which are not understood to be in any way limiting.

## EXAMPLES

Table 1 below lists the ingredients, their trade names and sources of supply. All ingredients listed in this Table 1 are, unless otherwise indicated, commercially available and have been used in commercially customary quality.

In each case, the curing component (B) of the commercially available injection mortar Hilti HIT-HY200-A (Hilti AG, FL-Schaan) was used. This curing component (B) comprises benzoyl peroxide as a hardening agent, as well as fumed silica, other fillers and water.

*Table 1: Ingredients*

| ***Trade name*** | ***Chemical name*** | ***Supplier*** | ***CAS no.*** |
|---|---|---|---|
| *Tolylene-2,4-diisocyanate -tech 80% (TDI)* | *2,4-TDI (80%) 2,6-TDI (20%)* | *Sigma-Aldrich* | *584-84-9* |
| *Ancamine® K-54* | *2,4,6-tris(dimethylaminomethyl)phenol, bis[(dimethylamino)methyl]phe nol* | *Evonik* | *90-72-2* |
| *Benzoyl chloride* | *benzoyl chloride* | *AppliChem* | *98-88-4* |
| *Visiomer® HPMA 98* | *hydroxyl propanol methacrylate* | *Evonik* | *27813-02-1* |
| *Visomer® 1,4-BDDMA* | *1,4-butanediol dimethacrylate* | *Evonik* | *2082-81-7* |
| *TIB KAT® 216* | *dioctyltin dilaurate (DOTL)* | *TIB Chemicals AG* | *3648-18-8* |
| *Phenothiazine_D_Prills* | *phenothiazine* | *Allessa Chemie GmbH* | *92-84-2* |
| *Tempol* | *4-hydroxy -2,2, 6,6- tetramethyl piperidin-1-oxyl* | *Evonik* | *2226-96-2* |
| *Quartzsand F32* | *silica sand* | *Quarzwerke Frechen* | *14808-60-7* |
| *Secar 80* | *calcium aluminate cement* | *Kerneos* | *65997-16-2* |
| *Cab-O-Sil TS-720* | *fumed silica* | *CABOT GmbH* | *67762-90-7* |
| *Luprant® MIS* | *2,4'-and 4,4-diphenylmethane diisocyanate (MDI)* | *Elastogran GmbH* | *26447-40-5* |
| *TBC OPTIMA 100% Flakes* | *4-tert-butylcatechol* | *Rhodia, France* | *98-29-3* |
| *DiPpT* | *N,N-Bis-(2-hydroxypropyl)-p-toluidin* | *Saltigo, Germany* | *38668-48-3* |
| *UMA-121* | *urethane methacrylate resin according to WO2019/007667, example C1: the resin was prepared and further used as a master batch in mixing with BDDMA in a mass ratio of* 65/35 | | |
| *Catechol Flakes* | *1,2-dihydroxybenzene* | *Solvay* | *120-80-9* |
| *Desmodur® XP 2838* | *HDI/IPDI isocyanurates* | *Covestro AG* | *28182-81-2 (HDI trimers) 53880-05-0 (IPDI trimers)* |

(continued)

| *Trade name* | *Chemical name* | *Supplier* | *CAS no.* |
|---|---|---|---|
| *Desmodur® IL EA* | *TDI isocyanurates* | *Covestro AG* | *26006-20-2 (TDI trimers)* *141-78-6 (Ethyl acetate)* |
| *Takenate™ D-132N (NS)* | *XDI isocyanurates* | *Mitsui chemicals GmbH* | *No* CAS Nr. Urethanharz 3634-83-1 *(1,3-Bis(isocyan atomethyl) Benzol)* |

1. Resin synthesis

In-house trimerization was performed in a 1000 mL three-neck flask in an oil bath with nitrogen gas. The flask was equipped with a condenser, a nitrogen gas inlet and a thermometer. After positioning all the equipment, two stabilizers, phenothiazine and Tempo!, were mixed in Visiomer® 1,4-BDDMA with a magnetic stirrer for 20 minutes at 50 °C under an inert atmosphere. Keeping all the conditions, TDI was added into the flask. After stabilizing temperature, the catalyst, Ancamine® K-54, was added. The reaction was carried out until desirable NCO conversion is reached and was stopped by deactivating the catalyst with benzoyl chloride to obtain the NCO functionalized prepolymers.

The NCO functionalized prepolymers were directly converted with Visiomer® HPMA 98 in a one-pot reaction to obtain the corresponding urethane methacrylate resins. For this, after deactivation with benzoyl chloride, the mixture was heated to 80°C, dioctyltin dilaurate (TIB KAT® 216) was added and Visiomer® HPMA 98 added dropwise.

The mass of HPMA was calculated with the below equation.

$$m_{HPMA,1mol} = \frac{m_{TDI}}{Eq.Mw} \times MW_{HPMA}$$

Isocyanurate structure of prepolymer 1 and 2 was confirmed by IR measurements.

*Table 2: Resin synthesis (Resins 1 to 3)*

| | *Prepolymer 1/ Resin 1* | *Prepolymer 2/ Resin 2* | *Prepolymer 3/ Resin 3* |
|---|---|---|---|
| *weight %* | | | |
| *Phenothiazine* | 0.02 | 0.02 | 0.02 |
| *Tempol* | 0.02 | 0.02 | 0.02 |
| *Visomer® 1,4-BDDMA* | 35.01 | 39.95 | 35.03 |
| *TDI* | 23.31 | 24.07 | |
| *MDI* | | | 26.68 |
| *Ancamine® K54* | 0.23 | 0.32 | 0.28 |
| *Benzoyl chloride* | 0.12 | 0.18 | 0.15 |
| *TIB KAT® 216* | 0.02 | 0.02 | 0.02 |
| *Visiomer® HPMA 98* | 41.27 | 35.42 | 37.8 |
| *Reaction time for trimerization step* | 45 min | 120 min | 90 min |
| *NCO content (%) of NCO functionalized prepolymers* | 29.77 | 18.76 | 22.18 |
| *Eq. Mw (g/mol) of NCO functionalized prepolymers* | 141.25 | 253.94 | 189.48 |

The NCO content (%) was determined by back titration of di-n-butylamine with 1 molar hydrochloric acid. An excess of di-n-butylamine was added to the sample containing the NCO-containing compound and stirred for 10 minutes at

room temperature. The remaining amount of di-n-butylamine was determined by titration with 1 molar hydrochloric acid to equivalence point. The NCO content (%) was calculated using the amount of consumed di-n-butylamine.

2. Preparing resin mixtures

*Table 3: Resin mixtures 1 to 4*

| | *Resin mixture 1 - reference* | *Resin mixture 2* | *Resin mixture 3* | *Resin mixture 4* |
|---|---|---|---|---|
| *Weight %* | | | | |
| *Resin 1* | | 37.5 | | |
| *Resin 2* | | | 27.0 | |
| *Resin 3* | | | | 37.5 |
| *UMA-121* | 37.5 | | | |
| *HPMA* | 19.8 | 20 | 23.5 | 20 |
| *1,4-BDDMA* | 40 | 40 | 47 | 40 |
| *DiPpT* | 2.30 | 2.10 | 2.10 | 2.1 |
| *Catechol* | 0.27 | 0.27 | 0.27 | 0.27 |
| *TBC* | 0.09 | 0.13 | 0.13 | 0.13 |

To prepare resin mixtures according to Table 3 the components therein were stirred until a solution was obtained.

3. Preparing component (A)

*Table 4: Component (A) 1 to 4*

| | *Component (A) 1 - reference* | *Component (A) 2* | *Component (A) 3* | *Component (A) 4* |
|---|---|---|---|---|
| *Weight %* | | | | |
| *Resin mixture 1-reference* | 34.5 | | | |
| *Resin mixture 2* | | 34.5 | | |
| *Resin mixture 3* | | | 34.5 | |
| *Resin mixture 4* | | | | 34.5 |
| *Quartysand F32* | 44.7 | 44.7 | 44.7 | 44.7 |
| *Secar 80* | 18.5 | 18.5 | 18.5 | 18.5 |
| *Cab-O-Sil TS-720* | 2.3 | 2.3 | 2.3 | 2.3 |

Ingredients of Component (A) in Table 4 were dissolved using a PC Laborsystem Dissolver from Type LDV 0.3-1 for 8 Minutes at 3500 rpm under Vacuum (Pressure ≤100 mbar) with a 55 mm Dissolver disk and an edge scraper.

4. Preparing the two-component system

*Table 5: Two-Component System (Mortars 1 to 4)*

| | *Component (A)* | *Component (B)* | *Mixing ratio A:B* |
|---|---|---|---|
| *Mortar 1-reference* | 1 | *HY 200-A B component (batch ID #8110825)* | *5:1* |
| *Mortar 2* | 2 | | |
| *Mortar 3* | 3 | | |
| *Mortar 4* | 4 | | |

Component (A) and corresponding Component (B) were filled in 5:1 hard cartridges to obtain the two-component system (mortar).

*Table 6: Pull-out loads*

| | *Mortar 1 - reference* | *Mortar 2* | *Mortar 3* |
|---|---|---|---|
| *Bond strength (MPa)* | 15.4 | 16.7 | 17.0 |

To determine the load values of the cured compound in concrete, pull-out tests were carried out under B3 (160°C) conditions according to the description of the guideline ETAG 001 Part 5 (Guideline for the European technical approval for metal dowels for anchoring in concrete) replaced by EAD 330499-00-0601. For these tests, high-strength anchor threaded rods (size M12) were anchored into a drill-drilled cleaned borehole (2x compressed air 6 bar, 2x brushing out and 2x compressed air 6 bar) with a diameter of 14 mm and a borehole depth of 60 mm in concrete slabs (C20/25) with the respective chemical mortar compound at approx. 20°C. For the pull-out tests under B3 conditions (160°C), the concrete slabs were tempered for 48 hours in an oven at the target temperature of 160°C respectively after a curing time of 24 hours. Subsequently, the pull-out tests were carried out at the target temperature of 160°C. As can be seen from Table 6 above the bond strength of Mortar 2 and 3 are improved in comparison to the Mortar 1, which does not use isocyanurate technology of the present invention.

*Table 7: Shrinkage results*

| | *Mortar 1 - reference* | *Mortar 2* | *Mortar 4* |
|---|---|---|---|
| *Shrinkage (%)* | *4.59* | *4.14* | *3.86* |
| *Co V* | *2.64%* | *10.38%* | *5.2%* |
| *Shrinkage ($cm^3/g$)* | *0.0253* | *0.0226* | *0.0212* |

As can be seen in Table 7, shrinkage (%) of a mortar composition can also be reduced when a resin composition according to the present invention is used.

Shrinkage of the samples is measured as change of the height of a mortar sample while curing. The tests are performed in the following way: 2.5 g of mixed mortar are placed on steel plate. A reflector is placed on top the mortar sample. The height of mortar sample and reflector is adjusted to 2.5 cm. The shrinkage is obtained by change of height of the mortar while curing measured using a laser being reflected by the reflector. The obtained values are shown in % in Table 7.

## Claims

**1.** A process for producing a resin composition comprising at least one compound of isocyanurate, comprising the steps of

(a) trimerizing diisocyanates comprising at least one (C1-C4 alkyl) substituted or unsubstituted benzyl ring and/or comprising at least one (C1-C4 alkyl) substituted or unsubstituted cyclohexyl ring, preferably selected from the group comprising *toluylene diisocyanate, diphenylmethane diisocyanate, xylylene diisocyanate, isophorone diisocyanate, tetramethylxylylene diisocyanate, 1,3-bis(isocyanatomethyl)cyclohexane,* and combinations or two or more thereof,

(b) reacting the NCO groups of the resulting trimer of step (a) with at least one hydroxy alkyl methacrylate according to formula (I)

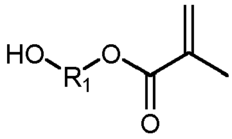 (I),

wherein R1 is a branched or linear aliphatic C1-C15 alkylene group; and
wherein the NCO content (%) of the trimer of step (a) is in the range of from 10 to 40 %.

**2.** The process for producing a resin composition according to claim 1, wherein the reaction time for step (a) is in the range of from about 20 min to about 160 min.

**3.** The process for producing a resin composition according to claim 1 or 2, wherein the trimerizing step (a) is carried out in the presence of at least one reactive diluent, preferably at least one reactive diluent that does not react with NCO groups.

**4.** The process for producing a resin composition according to any one of claims 1 to 3, comprising the further step: (c) combining at least one reactive diluent with the resulting functionalized trimer of step (b).

**5.** A resin composition comprising at least one compound isocyanurate comprising at least one (C1-C4 alkyl) substituted or unsubstituted benzyl ring and/or comprising at least one (C1-C4 alkyl) substituted or unsubstituted cyclohexyl ring and having a methacrylate functionalization as a base resin produced according to any one of claims 1 to 4.

**6.** The resin composition according to claim 5, wherein the resin composition does not comprise another radically curable compounds as a base resin.

**7.** The resin composition according to claim 5 or 6, comprising at least one inhibitor.

**8.** The resin composition according to any one of claims 5 to 7, comprising at least one accelerator.

**9.** A multi-component reactive resin system, comprising:
a reactive resin component (A) comprising the resin composition according to any one of claims 5 to 8 and a curing component (B).

**10.** The multi-component reactive resin system according to claim 9, wherein the reactive resin component (A) comprises at least one filler, preferably an inorganic filler.

**11.** The multi-component reactive resin system according to claim 9 or 10, wherein the curing component (B) comprises fillers and/or additives.

**12.** The multi-component reactive resin system according to any one of claims 9 to 11 in a form of a two-component system consisting of component (A) and component (B).

**13.** A mortar composition comprising the multi-component reactive resin system according to any one of claims 9 to 12.

**14.** A use of resin composition as base resin according to any one of claims 5 to 8 in a multi component reactive resin system for anchoring means to improve load values at high temperatures, preferably at 80 °C.

**15.** A method for the chemical fastening of construction elements in boreholes, wherein the mortar composition of claim 13 or the multi component epoxy resin material according to any one of claims 9 to 12 is used for the chemical fastening.

Europäisches Patentamt
European Patent Office
Office européen des brevets

# EUROPEAN SEARCH REPORT

Application Number
EP 23 21 9305

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2019/367665 A1 (HEINZ PAUL [DE] ET AL) 5 December 2019 (2019-12-05)<br>* paragraphs [0044], [0065], [0154], [0155], [0141], [0138], [0108]; claims 16,22; examples 1-20 *<br>----- | 1-12,14<br>13,15 | INV.<br>C08G18/67<br>C08L75/16<br>C04B26/16<br>C08G18/79<br>C08G18/81 |
| Y<br>A | WO 2012/158887 A1 (ILLINOIS TOOL WORKS [US]; ROURKE ANDREW J [US]) 22 November 2012 (2012-11-22)<br>* paragraph [0009]; claims 1-15 *<br>----- | 13,15<br>1-12,14 | |

TECHNICAL FIELDS SEARCHED (IPC)

C08G
C08L
C04B

The present search report has been drawn up for all claims

1

| Place of search | Date of completion of the search | Examiner |
|---|---|---|
| Munich | 5 June 2024 | Buestrich, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 21 9305

This annex lists the patent family members relating to the patent documents cited in the above-mentioned European search report. The members are as contained in the European Patent Office EDP file on
The European Patent Office is in no way liable for these particulars which are merely given for the purpose of information.

05-06-2024

| Patent document cited in search report | Publication date | Patent family member(s) | Publication date |
|---|---|---|---|
| US 2019367665 A1 | 05-12-2019 | CN 109923142 A | 21-06-2019 |
| | | CN 109923143 A | 21-06-2019 |
| | | CN 109963890 A | 02-07-2019 |
| | | CN 110023368 A | 16-07-2019 |
| | | CN 114874411 A | 09-08-2022 |
| | | EP 3538583 A1 | 18-09-2019 |
| | | EP 3538584 A1 | 18-09-2019 |
| | | EP 3538585 A1 | 18-09-2019 |
| | | EP 3538586 A1 | 18-09-2019 |
| | | JP 7216644 B2 | 01-02-2023 |
| | | JP 2019535554 A | 12-12-2019 |
| | | KR 20190086447 A | 22-07-2019 |
| | | US 2018133953 A1 | 17-05-2018 |
| | | US 2019337224 A1 | 07-11-2019 |
| | | US 2019367665 A1 | 05-12-2019 |
| | | US 2019367666 A1 | 05-12-2019 |
| | | US 2020190245 A1 | 18-06-2020 |
| | | WO 2018087382 A1 | 17-05-2018 |
| | | WO 2018087395 A1 | 17-05-2018 |
| | | WO 2018087396 A1 | 17-05-2018 |
| | | WO 2018087399 A1 | 17-05-2018 |
| WO 2012158887 A1 | 22-11-2012 | AU 2012255713 B2 | 07-05-2015 |
| | | EP 2709963 A1 | 26-03-2014 |
| | | NZ 618015 A | 31-03-2016 |
| | | NZ 707552 A | 25-11-2016 |
| | | US 2012296038 A1 | 22-11-2012 |
| | | US 2013327464 A1 | 12-12-2013 |
| | | WO 2012158887 A1 | 22-11-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012158887 A1
- DE 102011077248 B1
- DE 19956509 A1
- DE 19531649 A1
- EP 1935860 A1
- WO 10108939 A1
- DE 102011017626 B4
- US 3297745 A
- US 3772404 A
- US 4618658 A
- GB 2217722 A1
- DE 3744390 A1
- DE 4131457 A1
- US 20110071234 A1
- DE 2312559 A1
- EP 0044352 A1
- DE 19902685 A1
- EP 0684906 A1
- DE 4111828 A1
- DE 19961342 A1
- WO 2010108939 A1
- US 20020091214 A1
- DE 3226602 A1
- EP 0432087 A1
- EP 1371671 A1
- DE 102011078785 A1
- DE 102004035542 A1
- EP 1329469 A1
- EP 1975190 A1
- EP 2017260 A1
- EP 0387418 A2


### Non-patent literature cited in the description


- **BALLARD N.** ; **ASUA J. M.** Radical polymerization of acrylic monomers: An overview. *Progress in Polymer Science*, 2018, vol. 79, 40-60
- **LAHOUAR, M.** ; **CARON, J.-F.** ; **PINOTEAU, N.** ; **FOR6T, G.** ; **BENZARTI, K.** Mechanical behavior of adhesive anchors under high temperature exposure: experimental investigation. *International Journal of Adhesion and Adhesives*, 2017, vol. 78, 200-211
- IUPAC Compendium of Chemical Terminology. **A. D. MCNAUGHT** ; **A. WILKINSON**. Gold Book. Blackwell Scientific Publications, 1997
- **M. MALIK et al.** *J. M. S. - Rev. Macromol. Chem. Phys.*, 2000, vol. C40 (2,3), 139-165
- *CHEMICAL ABSTRACTS*, 3634-83-1